# EUROPEAN PATENT APPLICATION

(11) **EP 4 349 491 A1**
(43) Date of publication of application: **10.04.2024**
(21) Application number: 23181020.1
(22) Date of filing: 22.06.2023
(51) Int. Cl.: B05B 7/00

(54) **UNDERCARRIAGE FOAM DISPENSER**

(30) Priority: 23.06.2022 US 202263354712 P; 08.06.2023 US 202318207643
(71) Applicant: Gold Eagle Co., Chicago, IL 60632 (US)
(72) Inventor: BANACH, Matthew, Chicago, 60632 (US)
(74) Representative: Studio Torta S.p.A.

(57) **Abstract**

An undercarriage soapy foam dispenser having a handle adapted to receive pressurized water, a cleaning solution aspirator, a first supply line coupled to the cleaning solution aspirator, a second supply line disposed at a non-zero angle relative to the first supply line, a spray bar coupled to the second supply line, one or more nozzles coupled to the spray bar, and aerators respectively disposed between the nozzles and the second supply line.

## Description

### Cross References to Related Applications

This application claims the benefit of U.S. Provisional Patent Application Serial No. 63/354,712, filed June 23, 2022, the contents of which are incorporated herein by reference in their entirety.

### Technical Field of the Invention

The present invention relates to a soap foam dispenser for use on the underside of a vehicle.

### Background of the Invention

Automobiles require periodic washing, including the undercarriage. Constant improvements to soaps and applicators have been developed to make the car washing process easier and more effective at removing contaminants. The first step to any vehicle washing is applying soap and water to the dirty sections. To improve the mixture of water and soap applied to a vehicle, foam dispensers are typically used. Foam dispensers mix a desired amount of soap, water, and air to generate a soapy foam that is applied to the vehicle. The soap foam better adheres to contaminants compared to just soapy water, thereby easing removal of the contaminants from the vehicle.

However, current foam dispensers are not capable of easily reaching the underside of a vehicle. Vehicle undercarriages may currently be washed using pressure washers that spray soapy water and/or pressurized water under the vehicle. However, these systems are not capable of producing a soap foam like a foam dispenser, so the soapy water drips off the vehicle and fails to properly clean or remove contaminants.

### Summary of the Invention

The present invention relates broadly to an undercarriage foam dispenser adapted to apply a soap foam cleaning solution to the underside of a vehicle. The foam dispenser includes nozzles adapted to aerate a cleaning mixture, such as soap and water, under pressure to create a soapy foam solution. The nozzle is oriented at a predetermined or selected angle from a supply line that includes a handle for a user to hold, thereby allowing a user to reach under the vehicle to apply soapy foam solution for purposes of cleaning. The nozzles are coupled to a spray bar that distributes the soapy foam solution to the nozzles from the supply line. The soapy foam solution adheres better to contaminants and vehicle components compared to just water or soapy water, thereby better removing undercarriage contaminants from the vehicle.

In an embodiment, an undercarriage soapy foam dispenser is disclosed. The undercarriage soapy foam dispenser includes a handle adapted to receive pressurized water, such as, for example, a pressure washer or regular commercial or residential hose pressure; a cleaning solution aspirator coupled to the handle; a first supply line coupled to the soap reservoir; a second supply line disposed at a non-zero angle relative to the first supply line; a spray bar coupled to the second supply line; and nozzles coupled to the spray bar; and aerators between the nozzles and the second supply line.

In a second embodiment, a spray bar assembly for an automotive undercarriage soapy foam dispenser adapted to dispense soapy foam is disclosed. The spray bar assembly includes a bar adapted to receive a cleaning solution; nozzles coupled to the bar and adapted to receive the cleaning solution from the bar; aerators adapted to generate soapy foam and a wheel coupled to the bar for better maneuverability.

In another embodiment, an undercarriage soapy foam dispenser is disclosed. The undercarriage soapy foam dispenser includes a handle adapted to receive pressurized water, such as, for example, from a pressure washer or regular commercial or residential hose pressure; a soap reservoir coupled to the handle and adapted to contain a cleaning solution; a first supply line coupled to the soap reservoir; a spray bar coupled to the first supply line; nozzles coupled to the spray bar; aerators; and a wheel coupled to the spray bar for better maneuverability.

### Brief Description of the Drawings

For the purpose of facilitating an understanding of the subject matter sought to be protected, there is illustrated in the accompanying drawing embodiments thereof, from an inspection of which, when considered in connection with the following description, the subject matter sought to be protected, its construction and operation, and many of its advantages, should be readily understood and appreciated.
FIG. 1 is a perspective view of an undercarriage soapy foam dispenser, according to an embodiment of the present invention.
FIG. 2 is a top plan view of a spray bar, according to an embodiment of the present invention.
FIG. 3 is a perspective side view of the spray bar of FIG 2.
FIG. 4 is a top plan view of a fitting, an angled fitting, and a nozzle, according to an embodiment of the present invention.
FIG. 5 is an exploded view of a fitting, an angled fitting, and a nozzle, according to an embodiment of the present invention.
FIG. 6 is an exploded view of a fitting, an angled fitting, and a nozzle, showing the interior of the fitting, and the interior view of the angled fitting with the mesh aerator disposed in the interior of the angled fitting, according to an embodiment of the present invention.
FIG. 7 is a perspective view of a cleaning solution aspirator, according to an embodiment of the present invention.

### Detailed Description

While this invention is susceptible of embodiments in many different forms, there is shown in the drawings, and will herein be described in detail, a preferred embodiment of the invention with the understanding that the present disclosure is to be considered as an exemplification of the principles of the invention and is not intended to limit the broad aspect of the invention to embodiments illustrated. As used herein, the term "present invention" is not intended to limit the scope of the claimed invention and is instead a term used to discuss exemplary embodiments of the invention for explanatory purposes only.

The present invention relates broadly to an undercarriage soapy foam dispenser adapted to apply a soapy foam cleaning solution to the underside of a vehicle. The soapy foam dispenser includes nozzles adapted to aerate a cleaning mixture, such as soap and water, under pressure to create a soapy foam cleaning solution. In an embodiment, the water may be pressurized by a pressure washer or with regular commercial or residential water hose pressure. In another embodiment, aerators may be disposed along a water line between the handle and the nozzles. The nozzles may be oriented at a fixed, predetermined angle, or rotatable or pivotable to a selected angle from a supply line that includes a handle for a user to hold, thereby allowing a user to better reach under a vehicle to apply soapy foam cleaning solution. The nozzles are coupled to a spray bar that distributes a cleaning mixture to the nozzles from the supply line, thereby creating the soapy foam solution. Providing soapy foam rather than just water or soapy water makes it practical to use a soapy foam formulation that may include additional cleaning chemicals or components that are better targeted to remove and/or neutralize desired contaminants, such as dirt, salt residue, oils, and greases, which are typically present on the undercarriage of a vehicle.

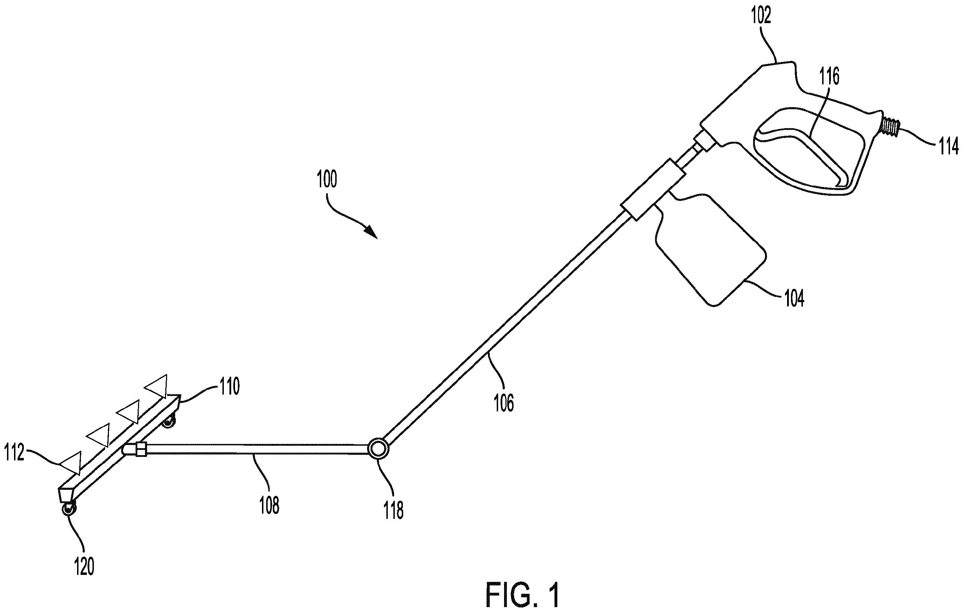

Referring to FIG. 1, an undercarriage soapy foam dispenser 100 according to an embodiment of the present invention includes a handle 102, a soap reservoir 104, first 106 and second 108 supply lines, a spray bar 110, and nozzles 112. The undercarriage soapy foam dispenser 100 is adapted to receive pressurized water from, for example, a pressure washer or typical commercial or residential water hose, and apply soapy foam to an underside of a vehicle for purposes of cleaning.

The handle 102 may include a water inlet 114 adapted to receive pressurized water. In an embodiment, the handle 102 can include an actuator 116 that can be selectively depressed or otherwise actuated by a user between first and second positions (e.g., ON or OFF) to control the flow of the pressurized water through handle 102 and the first 106 and second 108 supply lines.

The soap reservoir 104 may be coupled to the handle 102. The soap reservoir 104 is adapted to contain a desired cleaning solution, and is adapted to mix the solution with the pressurized water upon depression of the actuator 116, thereby creating a soapy foam cleaning solution. In an embodiment, the soap reservoir 104 includes a selector to allow the user to control or vary the amount of the cleaning solution that is added to the pressurized water.

The first supply line 106 may be coupled to the soap reservoir 104 and may be disposed at a non-zero angle relative to the second supply line 108. In an embodiment, the first supply line 106 is releasably coupled to the soap reservoir 104, such that the first supply line 106 can be be disconnected from the soap reservoir for storage, filing of the soap reservoir 104 or cleaning parts. In an embodiment, the first supply line 106 may be pivotably coupled to the second supply line 108 via a pivot joint 118 to allow a user to selectively position the first supply line 106 relative to the second supply line 108. The pivot joint 118 is adapted to retain the selected angle by cooperatively engaging protrusions with respective indents. For example, when protrusions are selectively respectively engaged with indents, the pivot joint 118 will be locked an not freely rotate. For example, the pivot joint 118 may include protrusions on the portion connected to the first supply line 106 and respective indents on the portion connected to the second supply line 108, or vice versa. In another embodiment, the pivot joint 118 may retain a selected angle by frictional interference between the first 106 and second 108 supply lines. In an embodiment, the pivot joint 118 is adapted to retain a selected angle selected by the user during use of the undercarriage soapy foam dispenser. In an embodiment, the first 106 and second 108 supply lines are releasably coupled such that they can be disconnected for storage or cleaning. The first 106 and second 108 supply lines are preferably rigid, but may also be flexible.

In an embodiment, the spray bar 110 is coupled to the second supply line 108 and is disposed substantially perpendicular to the second supply line 108. In an embodiment, the second supply line 108 is pivotably coupled to the spray bar 110 via a pivot joint to allow an orientation or position of the spray bar 110 to be adjusted or selectively positioned relative to the second supply line 108. The spray bar 110 is adapted to receive and distribute the soapy foam solution to the nozzles 112. In an embodiment, the spray bar 110 includes one or more wheels 120 adapted to allow a user to better maneuver and position the spray bar 110 to desired locations under the vehicle. Preferably, the wheels 120 are coupled to the bottom of the spray bar 110, and the wheels 120 include a pivotable attachment to the spray bar 110 to allow the wheels 120 to swivel or rotate relative to the spray bar 110. In another embodiment, the wheels 120 may be coupled to any of the sides of the spray bar 110 so the spray bar 110 is closer to the ground and is able to fit underneath vehicles having a lower ground clearance. It will be appreciated that while two wheels 120 are illustrated in FIG. 1, any number of wheels 120 may be provided on the spray bar 110 without departing from the spirit and scope of the present invention.

In an embodiment, the nozzles 112 are aeration nozzles that are adapted to generate a soapy foam from the cleaning solution by aerating the cleaning solution. In another embodiment, the nozzles 112 are fan nozzles, and the soapy foam is generated prior to passing through the nozzles. The nozzles 112 are coupled to the spray bar 110 and may be disposed substantially perpendicular to the second supply line 108. In an embodiment, the nozzles 112 may be disposed on the top of the spray bar 110, such as shown in FIG. 1. In another embodiment, the nozzles may be disposed on the side of a spray bar 110. In an embodiment, the nozzles 112 are pivotable or rotatable with respect to the spray bar 110, and the orientation of the nozzles 112 relative to the spray bar 110 can be individually or collectively adjusted. Nozzles 112 may be changeable to select a nozzle having a desired spray angle, such as, for example, a wide spray pattern or a narrow spray pattern. In another embodiment, the nozzles 112 are adjustable (such as between a narrow pattern to a wide pattern, and vice versa). In an embodiment, the nozzles 112 are shorter than conventional aeration nozzles used in conventional a foam dispenser to allow the undercarriage foam dispenser 100 of the present invention to better fit under the vehicle. In another embodiment, the nozzles may be adjustable to introduce more or less air (i.e., increase or decrease aeration) to provide soapy foam that is more or less dense, that is, adjustable to include more air into the cleaning solution to produce soap foam that is less dense, and vice versa. In another embodiment, the nozzles 120 may be changeable to select nozzles 120 to provide soap foam of the desired density. It will be appreciated that while four nozzles 112 are illustrated in FIG. 1, any number of nozzles may be provided on the spray bar 110 without departing from the spirit and scope of the present invention.

During operation, once the user depresses the actuator 116 (i.e., turns the spray bar 110 ON), a cleaning solution from the soap reservoir 104 mixes with pressurized water to create a cleaning solution. The cleaning solution is adapted to flow through the first 106 and second 108 supply lines to the spray bar 110. The spray bar 110 distributes the cleaning mixture to the nozzles 112, which aerate the cleaning mixture to generate a soapy foam that can be applied to the underside of a vehicle.

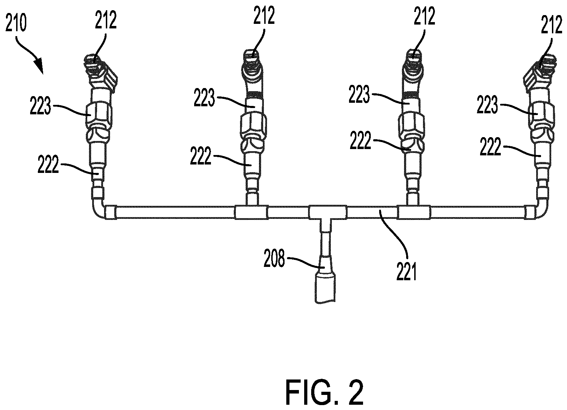

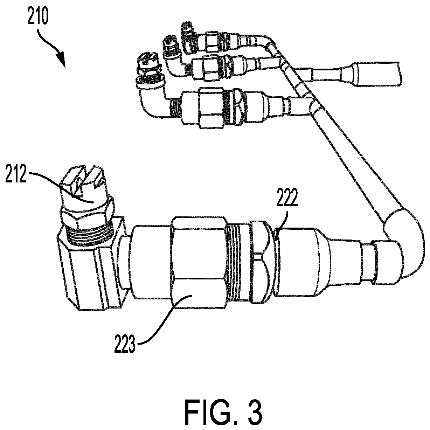

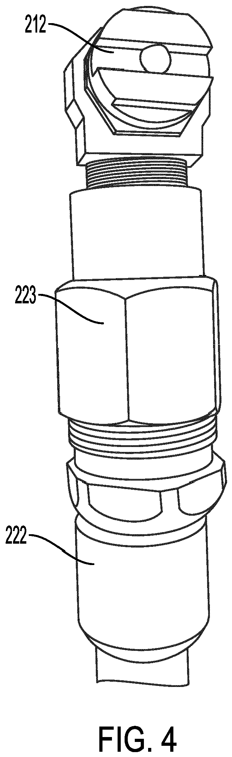

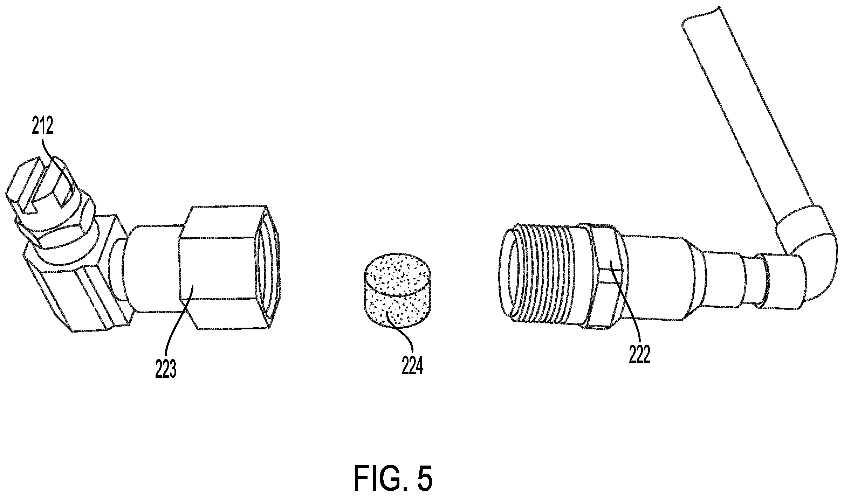

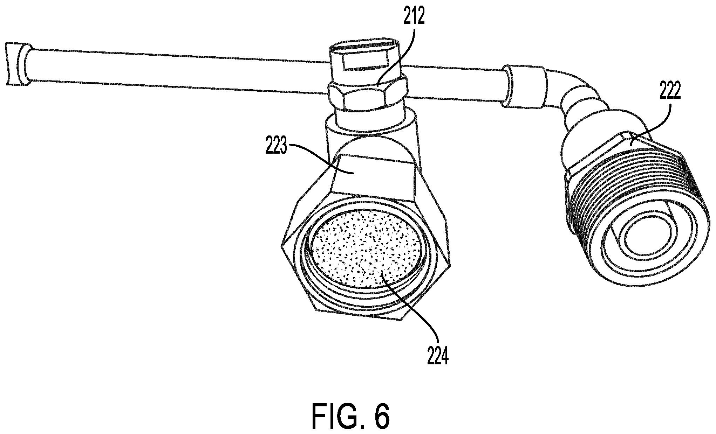

Referring to FIGs. 2-6, in an embodiment, the spray bar 210 is coupled to a second supply line 208 to receive pressurized water and cleaning solution. The spray bar may include a body 221, which is adapted to receive the water and cleaning solution mixture, and distribute the water and cleaning solution mixture to the fittings 222, which are coupled to angled fittings 223, and nozzles 212 coupled to the angled fittings 223. The angled fittings 223 may be about 90 degree angled fittings. As shown in FIGs. 5 and 6, a mesh aerator 224 may be disposed between the fittings 222 and the angled fittings 223, and the mesh aerator 224 generates soapy aerated foam from the water and cleaning solution. The soapy foam passes through the angled fittings 223 and the nozzles 212, spraying foam out of the nozzles. In an embodiment, the fittings 222 have an inner diameter of about % inch (about 6 mm) and the angled fittings have an inner diameter of about ½ inch (about 13 mm). In an embodiment, the tubing of the about ¼ inch (about 6 mm) fittings 222 extends through the about ½ inch (about 13 mm) tubing of the angled fittings 223, such that the end of the ¼" tubing abuts the mesh aerator 224, minimizing void volume. The minimized void improves the foam quality. In another embodiment, the mesh aerator 224 may be provided between the angled fitting 223 and the nozzle. However, generating the foam and then passing the foam through an angled fitting 223 has been found to produce a thicker foam, compared to an aerator and nozzle in a straight line.

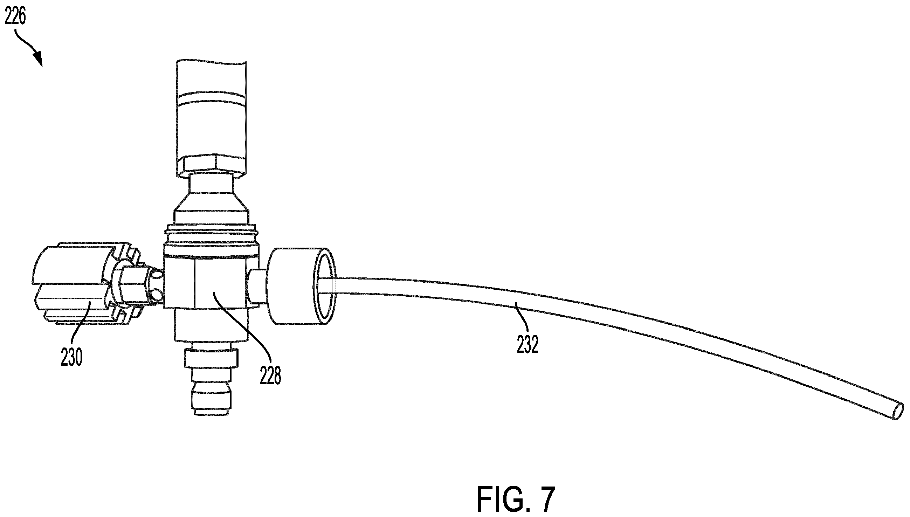

Referring to FIG. 7, an embodiment of a cleaning solution aspirator 226 is shown, which is adapted to mix water with a cleaning solution. The cleaning solution aspirator 226 includes a mixing section 228 where the cleaning solution is introduced into the water stream. The knob 230 controls how much of the cleaning solution is introduced into the water. More or less cleaning solution may be added by selectively rotating the knob 230 relative to the mixing section 228. A tube 232 may extend from the mixing section 228, and the tube has a distal end which draws cleaning solution from a reservoir (not shown) through the tube 232 and into the mixing section 228. In an embodiment, the cleaning solution aspirator 226 may be disposed proximal to the handle 102. In another embodiment, the cleaning solution aspirator 226 may be disposed between the spray bar 110 and the second supply line 108. In yet another embodiment, the soap reservoir 104 may be disposed proximal to the handle 102, while the cleaning solution aspirator 226 is disposed between the spray bar 110 and the second supply line 108. In this embodiment, the tube 232 extends from the soap reservoir 104, that is proximal to the handle, to the cleaning solution aspirator 226 that is disposed between the spray bar 110 and the second supply line 108.

As used herein, the term "coupled" and its functional equivalents are not intended to necessarily be limited to direct, mechanical coupling of two or more components. Instead, the term "coupled" and its functional equivalents are intended to mean any direct or indirect mechanical, electrical, or chemical connection between two or more objects, features, work pieces, and/or environmental matter. "Coupled" is also intended to mean, in some examples, one object being integral with another object. As used herein, the term "a" or "one" may include one or more items unless specifically stated otherwise.

The matter set forth in the foregoing description and accompanying drawings is offered by way of illustration only and not as a limitation. While particular embodiments have been shown and described, it will be apparent to those skilled in the art that changes and modifications may be made without departing from the broader aspects of the inventors' contribution. The actual scope of the protection sought is intended to be defined in the following claims when viewed in their proper perspective based on the prior art.

## Claims

1. A soapy foam dispenser comprising:
a handle adapted to receive pressurized water;
a cleaning solution aspirator coupled to the handle;
a first supply line coupled to the cleaning solution aspirator;
a second supply line coupled to the first supply line and disposed at an angle relative to the first supply line;
a spray bar coupled to the second supply line;
a nozzle coupled to the spray bar; and
an aerator disposed between the nozzle and the second supply line .

2. The soapy foam dispenser of claim 1, further comprising a pivot joint pivotably coupling the first and second supply lines to each other.

3. The soapy foam dispenser of claim 1, wherein the spray bar includes a wheel.

4. The soapy foam dispenser of claim 1, wherein the nozzle is adapted to produce an adjustable spray pattern.

5. The soapy foam dispenser of claim 1, wherein the nozzle is coupled to the spray bar via an angled fitting.

6. The soapy foam dispenser of claim 5, wherein the aerator is disposed between the spray bar and the angled fitting.

7. The soapy foam dispenser of claim 1, further comprising an actuator coupled to the handle that is adapted to control the flow of pressurized water through the handle.

8. The soapy foam dispenser of claim 2, wherein the pivot joint is adapted to selectively retain the angle.

9. The soapy foam dispenser of claim 1, wherein the nozzle is disposed on a top of the spray bar and substantially perpendicular to the spray bar and the second supply line.

10. The soapy foam dispenser of claim 1, wherein the nozzle is disposed on the top of the spray bar, and the nozzle forms a nozzle angle relative to the second supply line.

11. The undercarriage foam dispenser of claim 1, further comprising at least four nozzles.

12. A spray bar assembly for a dispenser adapted to dispense cleaning solution, the spray bar assembly comprising:
a bar adapted to receive a cleaning solution;
a nozzle coupled to the bar and adapted to receive the cleaning solution from the bar;
an aerator adapted to generate soap foam; and
a wheel coupled to the bar.

13. The spray bar assembly of claim 12, wherein the nozzle has a nozzle angle relative to the bar that is less than 90 degrees.

14. The spray bar assembly of claim 12, wherein the nozzle is adapted to produce an adjustable spray pattern.

15. The spray bar assembly of claim 12, wherein the nozzle is pivotably coupled to the bar.

16. The spray bar assembly of claim 12, wherein the wheel is adapted to swivel relative to the bar.

17. The spray bar assembly of claim 12, further comprising at least four nozzles.

18. A foam dispenser, comprising:
a handle adapted to receive pressurized water;
a soap reservoir coupled to the handle and adapted to contain a cleaning solution;
a first supply line coupled to the soap reservoir;
a spray bar coupled to the first supply line;
a nozzle coupled to the spray bar;
an aerator; and
a wheel coupled to the spray bar.

19. The foam dispenser of claim 18, wherein the aerator is a mesh aerator.

20. The foam dispenser of claim 19, wherein the nozzle is adapted to produce an adjustable spray pattern.
